# EUROPÄISCHE PATENTSCHRIFT

(11) **EP 3 152 072 B1**
(45) Veröffentlichungstag und Bekanntmachung des Hinweises auf die Patenterteilung: **04.04.2018**
(21) Anmeldenummer: 15736782.2
(22) Anmeldetag: 29.05.2015
(51) Int. Cl.: B60G 17/0165, B60G 17/0185, B60R 16/02, B60R 16/023, G01C 7/04, B60W 40/06

(54) **VERFAHREN ZUM PROAKTIVEN REGELN VON FAHRWERKSKOMPONENTEN**
METHOD FOR PROACTIVE CONTROLLING OF CHASSIS COMPONENTS
PROCÉDÉ D'ASSERVISSEMENT PROACTIF DE COMPOSANTS DE CHÂSSIS

(30) Priorität: 07.06.2014 DE 102014008425
(43) Veröffentlichungstag der Anmeldung: 12.04.2017
(73) Patentinhaber: Audi AG, 85045 Ingolstadt (DE)
(72) Erfinder: UNGER, Andreas, 85080 Gaimersheim (DE); GÖHRLE, Christoph, 85049 Ingolstadt (DE)
(74) Vertreter: Reichert, Thomas Klaus
(86) Internationale Anmeldenummer: PCT/EP2015/001095
(87) Internationale Veröffentlichungsnummer: WO 2015/185198

(56) Entgegenhaltungen:
- EP-A2- 1 138 530
- WO-A1-2014/195180
- DE-A1-102004 018 088
- DE-A1-102009 009 063
- DE-A1-102009 033 219
- DE-A1-102010 035 235
- DE-A1-102011 085 287
- DE-A1-102012 010 553
- US-A1- 2010 098 295

## Beschreibung

Die vorliegende Erfindung betrifft ein Verfahren zum Regeln einer Komponente eines Fahrwerks eines Fahrzeugs sowie ein entsprechend konfiguriertes Steuergerät.

Fahrzeuge mit aktiven bzw. proaktiven Fahrwerken, die sich an aktuelle Fahrbahneigenschaften automatisch anpassen, umfassen in der Regel einen sogenannten "reaktiven" Regler sowie einen sogenannten "proaktiven" Pfad. Mittels des reaktiven Reglers können Unebenheiten bzw. Fahrbahneigenschaften ausgeglichen werden nachdem ein jeweiliges Fahrzeug auf einen jeweiligen Streckenabschnitt bzw. einen jeweiligen Fahrbahnabschnitt aufgefahren ist. Bei einem proaktiven Regelungsverfahren wird hingegen eine Vorausschau, bspw. unter Verwendung einer Sensorik genutzt, um direkt bei einem ersten Kontakt mit einer Unebenheit bzw. einem potentiell relevanten Fahrbahnabschnitt eine Stellgröße zum Einstellen bzw. Regeln des Fahrwerks des jeweiligen Fahrzeugs bereitzustellen und das Fahrzeug präzise an den zu befahrenden Fahrbahnabschnitt im Voraus anzupassen.

Sowohl reaktive Regler als auch proaktive Regelungsverfahren zeigen Vor- und Nachteile. Bei einem proaktiven Regelungsverfahren kann bspw. eine Aktorstellung einer Komponente eines Fahrwerks eines Fahrzeugs bei einer Überfahrt einer Schwelle exakt an die Form der Schwelle, wie sie in Vorausschau ermittelt wurde, angepasst werden, so dass die Schwelle, wie sie in Vorausschau ermittelt wurde, vollkommen ausgeglichen wird und das Fahrzeug optimal an die Schwelle bzw. den entsprechenden Fahrbahnabschnitt adaptiert. Da jedoch ein durch eine jeweilige Sensorik zur Vorausschau ermittelter Datensatz aus Sensordaten in der Regel fehlerbehaftet ist, können Form und Position ggf. auftretender Unebenheiten, wie bspw. der erwähnten Schwelle, von einer realen Form oder Position der entsprechenden Unebenheit abweichen. Durch eine entsprechende Einstellung bzw. Regelung von bspw. einem Aktor eines Fahrzeugfahrwerks gemäß dem ermittelten Datensatz, kann es vorkommen, dass das Fahrwerk aufgrund von bspw. Messfehlern in dem Datensatz falsch eingestellt wird und entsprechend fehlerhaft auf die reale Unebenheit reagiert. Durch eine derart fehlerhafte Einstellung von Komponenten des Fahrwerks kann es vorkommen, dass das Fahrzeug destabilisiert wird und in eine Gefahrensituation gerät.
Was die reaktive Regelung mittels des reaktiven Reglers betrifft, so kann mit einem schnell arbeitenden reaktiven Regler ein Fahrwerk eines Fahrzeugs so eingestellt werden, dass eine Vielzahl an Unebenheiten ausgeglichen wird, wobei eine vollkommene, d. h. hundertprozentige Adaptation an jeweilige Unebenheiten in der Regel nicht erreicht werden kann. Reaktive Regler wirken sich ferner nachteilig auf ein Fahrverhalten eines jeweiligen Fahrzeugs aus, wenn sie zu schnell, d. h. mit einer zu hohen Bandbreite bzw. Verstärkung eingestellt sind, so dass in der Regel eine trägere Einstellung bzw. Parametrierung von Einstellungen gewählt wird, wodurch Unebenheiten nicht vollständig ausgeglichen werden können.
In der europäischen Patentschrift EP 2 382 118 B1 werden ein Verfahren und eine Vorrichtung zur Ermittlung eines einem Fahrzeug vorausliegenden Straßenprofils anhand von erfassten Bilddaten und/oder Fahrzeugeigenbewegungsdaten beschrieben, wobei eine Schätzvorrichtung vorgesehen ist, in Abhängigkeit derer zumindest eine Fahrwerksfunktion eines Fahrzeugs gesteuert und/oder geregelt wird.
Die deutsche Offenlegungsschrift DE 10 2012 010 553 A1 offenbart ein Verfahren zur Steuerung eines aktiven Fahrwerks eines Fahrzeugs, bei dem mittels von einem an dem Fahrzeug angeordneten Sensor erfassten Daten eines vorausliegenden Höhenprofils und unter Verrechnung mit Sollwerten einer Bewegung einer Karosserie des Fahrzeugs, Ansteuersignale für Aktuatoren des Fahrwerks erzeugt werden.

Weitere relevante Steuergeräte und Verfahren sind in die DE 10 2004 018 088 A und WO 2014/195180 A beschrieben.

Vor diesem Hintergrund wird ein Verfahren zum Regeln mindestens einer Komponente eines Fahrwerks eines Fahrzeugs vorgestellt, bei dem in Abhängigkeit einer aktuellen Sicherheit von durch eine Sensorik erfassten Sensordaten einer Fahrbahnbeschaffenheit eines zu befahrenden Fahrbahnabschnitts eine Parametrierung eines reaktiven Reglers der mindestens einen Komponente des Fahrwerks so verändert wird, dass der reaktive Regler bei einem Befahren des Fahrbahnabschnitts die Sensordaten mit einer gegenüber einem Normalbetrieb des reaktiven Reglers erhöhten Bandbreite und Verstärkung berücksichtigt, so dass der Regler in Abhängigkeit der entsprechend der aktuellen Sicherheit der Sensordaten gegenüber einem Normalbetrieb mit einer niedrigen Reaktionszeit regelt.

Ausgestaltungen ergeben sich aus den abhängigen Ansprüchen sowie der Beschreibung.

Das erfindungsgemäße Verfahren sieht vor, dass ein reaktiver Regler parametriert bzw. umgeschalten wird, falls Sensordaten dazu vorliegen, dass bspw. eine Unebenheit auf einer zu befahrenden Fahrbahn auftritt und eine Unsicherheit der zugrundliegenden Sensordaten hoch, d. h. bspw. über einem Schwellenwert ist. Durch das Umschalten bzw. neue Parametrieren des reaktiven Reglers wird bewirkt, dass der reaktive Regler mit einer gegenüber einem Normalbetrieb des Reglers hohen Bandbreite und Verstärkung regelt, so dass der reaktive Regler schnell, d. h. mit einer gegenüber einem Normalbetrieb reduzierten Reaktionszeit, auf jeweilige Fahrwerkskomponenten einwirkt und die jeweiligen Fahrwerkskomponenten, wie bspw. Stoßdämpfer, an den jeweiligen Fahrbahnabschnitt während einer Überfahrt entsprechend schnell adaptieren.

Unter einer Parametrierung ist im Kontext der vorliegenden Erfindung ein Vorgang zu verstehen, bei dem eine Vorrichtung wie bspw. ein reaktiver Regler parametriert, d. h. eingestellt wird, so dass die Vorrichtung ihre Eigenschaften, wie bspw. eine Bandbreite und Verstärkung jeweiliger Sensordaten an durch die Parametrierung veränderte Parameter, d. h. Betriebsparameter, anpasst.

Eine Fahrbahneigenschaft beschreibt im Kontext der vorliegenden Erfindung Eigenschaften einer Fahrbahn, wie bspw. Unebenheiten, Glätte oder einen Straßentyp, wie bspw. Schotterweg, Teerstraße oder Wiese, wobei auch jedes weitere Merkmal einer Fahrbahnbeschaffenheit verwendet werden kann, um eine Fahrbahneigenschaft zu beschreiben.

Unter einer Fahrbahn ist im Kontext der vorliegenden Erfindung eine zu befahrende Fläche, insbesondere eine Straße oder ein Weg zu verstehen, so dass ein Fahrbahnabschnitt einem Teil einer Fahrbahn entspricht, der bspw. von einem Sensor erfasst und in einem Datensatz über entsprechende Sensordaten abgebildet bzw. beschrieben werden kann.

Eine hohe Bandbreite ist im Kontext der vorliegenden Erfindung eine Bandbreite, die gegenüber einem Normalbetrieb erhöht, insbesondere um 50%, 100% oder 1000% erhöht ist.

Der Begriff Verstärkung beschreibt im Kontext der vorliegenden Erfindung eine Transformation eines Signals, wie bspw. eines Pegels, unter Verwendung bspw. eines Offsets oder eines Multiplikators, wobei die Transformation ursprüngliche Sensordaten sowohl erhöhen als auch verringern kann.

Einen Bereich bspw. eines Frequenzfensters mit festen Eckfrequenzen eines Filters für jeweilige Sensordaten, in dem eine Regelung erfolgt und außerhalb dessen keine Regelung erfolgt, beschreibt der Begriff Bandbreite im Kontext der vorliegenden Erfindung. Dies bedeutet, dass der reaktive Regler Sensordaten einer Sensorik, wie bspw. eines Höhenstandsmessers, eines Aufbaubeschleunigungssensors, eines Nickwinkelsensors oder eines Wanksensors filtert und nur auf Grundlage eines Teils bzw. Spektrums der Sensordaten innerhalb jeweiliger Eckfrequenzen regelt, d. h. Steuerbefehle erzeugt.

Um nach einer Unebenheit bzw. einem relevanten Fahrbahnabschnitt wieder in einen Normalbetrieb mit einer trägen, d. h. gegenüber dem Betrieb bei unsicheren Sensordaten langsameren bzw. normalen Reaktionszeit des reaktiven Reglers überzugehen, ist vorgesehen, dass der reaktive Regler nur so lange mit einer hohen Bandbreite und Verstärkung regelt bzw. betrieben wird, wie die Sensordaten mit einer hohen Unsicherheit behaftet sind oder ein jeweiliger relevanter Fahrbahnabschnitt gemäß den Sensordaten voraussichtlich andauert.

Ferner ist vorgesehen, dass für den Fall, dass sichere, d. h. zuverlässige Sensordaten vorliegen, die gemessenen Fahrbahnunebenheiten direkt nach Erfassung durch einen jeweiligen Sensor in Stellsignale zur Justierung des Fahrwerks, bspw. durch ein Steuergerät, umgerechnet werden, so dass die Unebenheit nicht mehr reaktiv sondern proaktiv, also vorausschauend noch vor einem Erstkontakt mit einem ggf. auftretenden Hindernis ausgeglichen wird. Es ist vorgesehen, dass der reaktive Regler bei einer proaktiven Regelung nicht aktiv ist.

Unter Sensordaten sind im Kontext der vorliegenden Erfindung alle Daten bzw. Datensätze zu verstehen, die von einer Sensorik, wie bspw. einer Kamera, ermittelt werden und die dazu dienen, einen Fahrbahnabschnitt zu beschreiben sowie jeweilige Fahrwerkskomponenten einzustellen.

Um Sensordaten über einen jeweiligen Fahrbahnabschnitt bzw. eine Fahrbahnbeschaffenheit zu erfassen bzw. zu ermitteln, ist vorgesehen, dass das jeweilige Fahrzeug über mindestens einen Sensor verfügt, der zur Vorausschau genutzt wird, d. h. einen jeweiligen zu befahrenden Fahrbahnabschnitt vermisst bzw. analysiert, und entsprechende Sensordaten eines zu befahrenden Fahrbahnabschnitts bspw. einem Steuergerät bereitstellt, so dass anhand der durch den mindestens einen Sensor bereitgestellten Sensordaten eine Regelung jeweiliger Fahrwerkskomponenten des jeweiligen Fahrzeugs erfolgen kann.

Um eine Sicherheit, d. h. Validität bzw. Verlässlichkeit, jeweiliger Sensordaten zu beurteilen, ist in Ausgestaltung vorgesehen, dass bspw. ein Sicherheitsindex in Form eines numerischen Werts bereitgestellt wird, so dass anhand des Sicherheitsindex beurteilt werden kann, ob eine beschleunigte reaktive Regelung oder ein Normalbetrieb mit bspw. einer proaktiven Regelung erforderlich ist.

Ferner ist in Ausgestaltung vorgesehen, dass der Sicherheitsindex bspw. in Abhängigkeit von potentiellen Messfehlern, Datenvarianzen oder Zusatzinformationen berechnet wird. Der Sicherheitsindex kann durch ein Steuergerät eines jeweiligen Fahrzeugs berechnet oder extern, bspw. von einem Informationsdienst, bereitgestellt werden.

In einer weiteren möglichen Ausgestaltung des erfindungsgemäßen Verfahrens ist vorgesehen, dass die Sensordaten mit GPS-Daten zu einem Datensatz verbunden und an einen Server übermittelt werden, der weitere Fahrzeuge mit entsprechenden Datensätzen von potentiell für eine reaktive Regelung relevanten Fahrbahnabschnitten versorgt.

Um verschiedene Fahrzeuge bspw. einer Fahrzeugflotte untereinander mit Informationen zu versorgen, d. h. bspw. Sensordaten oder andere Informationsquellen einzelner Fahrzeuge mehreren Fahrzeugen zugänglich zu machen, ist vorgesehen, dass jeweilige Informationen von jeweiligen Fahrzeugen zentral von einem Server gesammelt und verwaltet werden. Dabei werden die jeweiligen Sensordaten jeweiliger Fahrzeuge durch den Server mit GPS-Daten, d. h. Global Positioning System-Daten, verbunden bzw. jeweiligen GPS-Daten eines jeweiligen Fahrzeugs zugeordnet. Der Server ist ferner dazu konfiguriert, derart aufbereitete Sensordaten an zumindest einen Teil von mit dem Server in Verbindung stehenden Fahrzeugen weiterzuleiten, d. h. drahtlos zu übermitteln. Aufgrund der durch den Server bereitgestellten Daten können jeweilige Fahrzeuge, bspw. über ein Steuergerät, eine Sicherheit bzw. Verlässlichkeit von durch eigene Sensoren bereitgestellten Sensordaten beurteilen und ggf. frühzeitig, bspw. noch bevor überhaupt Sensordaten zu einem potentiell relevanten Fahrzeugabschnitt verfügbar sind, Einstellungen zur Regelung jeweiliger Fahrwerkskomponenten bzw. Regler berechnen und entsprechend schnell und präzise und sicher regeln bzw. ansteuern.

In einer weiteren möglichen Ausgestaltung des erfindungsgemäßen Verfahrens ist vorgesehen, dass der reaktive Regler in Abhängigkeit einer aktuellen Situation des Fahrzeugs und/oder einer aktuellen Situation einer jeweiligen Umgebung, während einem Befahren eines Fahrbahnabschnitts zumindest teilweise mit einer gegenüber einem Normalbetrieb erhöhten Bandbreite und Verstärkung regelt, wobei der reaktive Regler in Abhängigkeit jeweiliger Sensordaten über den Fahrbahnabschnitt mit einem Basiswert eingestellt wird.

Um eine Situation einer jeweiligen Umgebung, wie bspw. Wettereinflüsse, Kurvenfahrten, Fahrbahnverschmutzungen oder ähnliches sowie Situationen des Fahrzeugs, d. h. einen aktuellen technischen Zustand, zu berücksichtigen, ist vorgesehen, dass in Abhängigkeit einer aktuellen Situation der Umgebung und/oder des Fahrzeugs der reaktive Regler so parametriert wird, dass dieser in potentiell gefährlichen Situationen, d. h. Situationen, in denen eine Datenlage über eine Situation der Umgebung des Fahrzeugs potentiell unklar bzw. unsicher ist, mit einer erhöhten Bandbreite und Verstärkung regelt und in einer Situation, in der ein Normalbetrieb möglich ist bzw. sichere Sensordaten vorliegen, eine proaktive Regelung erfolgt.

In einer weiteren möglichen Ausgestaltung des erfindungsgemäßen Verfahrens ist vorgesehen, dass der reaktive Regler in Abhängigkeit einer Sicherheit der Sensordaten entweder in Abhängigkeit einer geänderten Parametrierung oder in Abhängigkeit eines eingestellten Basiswerts regelt.

In einer weiteren möglichen Ausgestaltung des erfindungsgemäßen Verfahrens ist vorgesehen, dass die mindestens eine Komponente des Fahrwerks des Fahrzeugs ausgewählt ist aus der folgenden Liste an Fahrwerkskomponenten: Aktoren, Stoßdämpfer, Federwegsbegrenzer, Druckregler, Bremssysteme oder Steuergeräte.

Da Fahrwerke von Fahrzeugen stetig komplexer werden und entsprechend eine Anzahl an Fahrwerkskomponenten stetig zunimmt, ist vorgesehen, dass das erfindungsgemäße Verfahren zur Regelung aller, eines Teils oder einzelner Fahrwerkskomponenten eines Fahrzeugs verwendet werden kann.

Das erfindungsgemäße Verfahren kann für jede Anordnung von Fahrzeugen mit aktiven bzw. semiaktiven Fahrwerkskomponenten, wie bspw. aktive Fahrwerke oder semiaktive Fahrwerke sowie einzelne Aktuatoren verwendet werden.

Es ist denkbar, dass ein jeweiliges Fahrzeug ein aktives Fahrwerk umfasst, dass auf einer parallelen Anordnung von Feder, Stoßdämpfer und Aktuator oder jeder möglichen Kombination von Aktuator und Feder bzw. Stoßdämpfer beruht, wobei auch eine ausschließliche Verwendung einzelner Aktuatoren denkbar ist.
Im Falle eines semiaktiven Fahrwerks ist vorgesehen, dass reaktive Regler verstellbarer Komponenten, wie bspw. Stoßdämpfer, vorausschauend, d. h. in Abhängigkeit jeweiliger Sensordaten beeinflusst, jedoch nicht bspw. aktiv angehoben werden, wie es bei einer proaktiven Regelung vorgesehen ist.

Weiterhin kann, bei Anordnung einer Feder und eines Aktuators in Reihe, der Aktuator für eine sogenannte "Federfußpunktverstellung" verwendet werden, um das jeweilige Fahrzeug auf Unebenheiten vorzubereiten.

Ferner betrifft die vorliegende Erfindung ein Steuergerät zur Anordnung in einem Fahrzeug, das dazu konfiguriert ist, mindestens einen reaktiven Regler so zu parametrieren, dass durch den reaktiven Regler in Abhängigkeit einer Sicherheit von durch eine Sensorik des Fahrzeugs ermittelten Sensordaten über eine Fahrbahnbeschaffenheit eines zu befahrenden Fahrbahnabschnitts die Sensordaten mit einer gegenüber einem Normalbetrieb des reaktiven Reglers erhöhten Bandbreite und Verstärkung zu berücksichtigen sind, wenn die Sensordaten mit einer hohen Unsicherheit behaftet sind.

Das erfindungsgemäße Steuergerät dient insbesondere zur Ausführung des erfindungsgemäßen Verfahrens.

Um jeweilige Daten bspw. einer Sensorik auszulesen, zu bewerten und bspw. entsprechende Sicherheitsindizes zu berechnen, sowie jeweilige Fahrwerkskomponenten anzusteuern, ist vorgesehen, dass das erfindungsgemäße Verfahren auf einem Steuergerät in einem Fahrzeug ausgeführt wird, wobei das Steuergerät über eine Schnittstelle zur drahtlosen Kommunikation mit einem externen Datendienst, der bspw. auf einem Server ausgeführt wird, in Verbindung stehen kann.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt eine schematische Übersicht über verschiedene Regelungsfälle für eine Ausführungsform des erfindungsgemäßen Verfahrens.
Figur 2 zeigt eine schematische Übersicht verschiedener Verläufe eines Sicherheitsindex, die verschiedene Regelungsfälle einer weiteren Ausführungsform des erfindungsgemäßen Verfahrens bedingen.

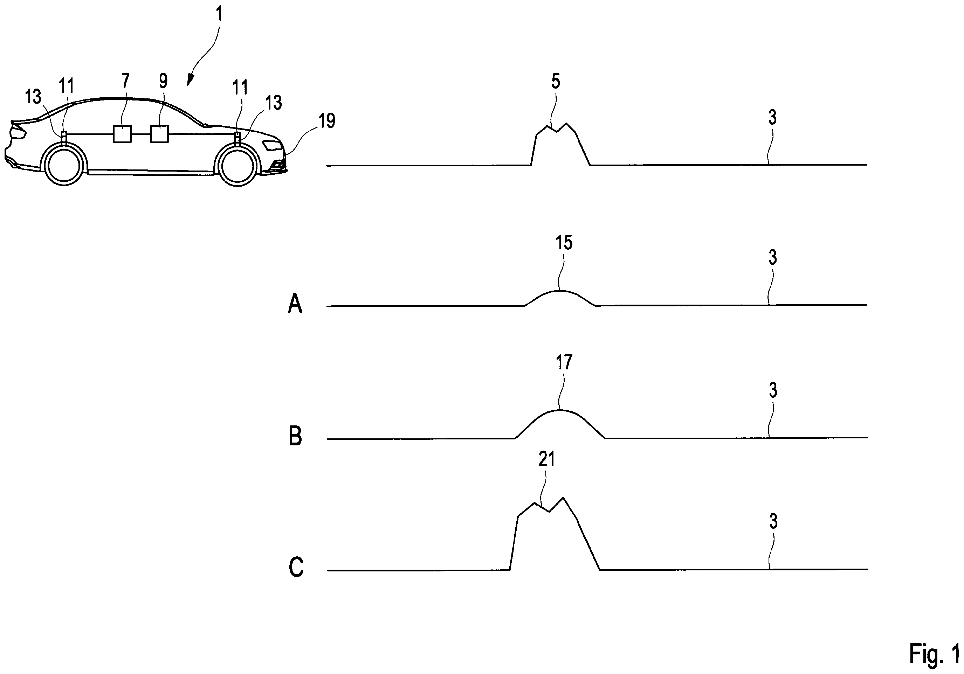

In Figur 1 befährt ein Fahrzeug 1 eine Straße 3, auf der sich eine Unebenheit 5 befindet. Das Fahrzeug 1 umfasst ein Steuergerät 7 sowie einen reaktiven Regler 9, die beide mit Aktoren 11 von aktiven Fahrwerkskomponenten 13 eines Fahrwerks des Fahrzeugs 1 in Verbindung stehen, um diese ggf. zu regeln, d. h. anzusteuern.

Für ein Einstellen der aktiven Fahrwerkskomponenten 13 auf die Unebenheit 5 sind verschiedene Szenarien von Regelungseinstellungen A, B und C dargestellt. In Szenario A erfolgt eine Regelung der Aktoren 11 und, dadurch bedingt, der aktiven Fahrwerkskomponenten 13 durch den reaktiven Regler 9, der sich in einem Normalbetrieb befindet und träge, d. h. mit einer geringen Bandbreite und Verstärkung, die Aktoren 11 regelt. Bedingt durch die geringe Bandbreite und Verstärkung werden die Aktoren 11 nur unzureichend auf die Unebenheit 5 eingestellt, da erst während der Auffahrt auf die Unebenheit 5 ein Regelbedarf festgestellt wird, so dass, aufgrund der trägen Einstellung, der reaktive Reglers 9 nur langsam auf die Unebenheit 5 reagiert. Dies bedeutet, dass sich das Fahrzeug 1 nur unzureichend auf die Unebenheit 5 einstellt und auf eine Form der Unebenheit 5 reagiert, die einer Erhöhung 15 entspricht, die bspw. am Anfang beim Auffahren auf die Unebenheit 5 gemessen wurde und, bedingt durch den trägen reaktiven Regler 9 erst verspätet und mit einer vergleichsweise niedrigen und deshalb hier unzureichenden Amplitude erfolgt.

Im Gegensatz zu Szenario A zeigt Szenario B eine Regelung durch einen schnell parametrierten bzw. regelnden reaktiven Regler 9. Durch eine vergleichsweise hohe Bandbreite und Amplitude kann der reaktive Regler 9 auch auf kleine Änderungen der Straße 3 reagieren und die Aktoren 11 entsprechend einstellen. Dies bedeutet, dass während das Fahrzeug 1 die Unebenheit 5 überfährt, jeweilige Schaltsignale schnell, d. h. gegenüber einem Normalbetrieb beschleunigt, und mit einer vergleichsweise hohen Amplitude an die Aktoren 11 durch den reaktiven Regler 9 ergehen, so dass die Aktoren 11 sich auf eine Erhöhung 17 einstellen bzw. eingestellt werden, die der Unebenheit 5 größtenteils entspricht.

In Szenario C ist eine proaktive Regelung dargestellt, bei der in Abhängigkeit einer Information auf Basis eines Sensors 19, der die Straße 3 vermisst, von dem Steuergerät 7 Steuerbefehle generiert werden, die die Aktoren 11 des Fahrzeugs 1 auf eine anstehende Überfahrt des Hindernisses 5 vorbereiten noch bevor das Fahrzeug 1 Kontakt mit dem Hindernis 5 hat. Aufgrund von Messfehlern des Sensors 19 stellt sich ein virtuelles Abbild 21 des Hindernisses 5 jedoch ungenau, d. h. in diesem Fall gegenüber dem Hindernis 5 zu groß dar, so dass die durch das Steuergerät 7 berechneten Steuerbefehle der Aktoren 11 nicht zu dem Hindernis 5 passen und das Fahrzeug 1 beim Überfahren des Hindernisses 5 ungünstig geregelt wird.

Es ist erfindungsgemäß vorgesehen, dass in Abhängigkeit einer Sicherheit bzw. Zuverlässigkeit der Informationen des Sensors 19 zwischen den in den Szenarien A, B und C beschriebenen Regelungsverfahren umgeschalten wird.

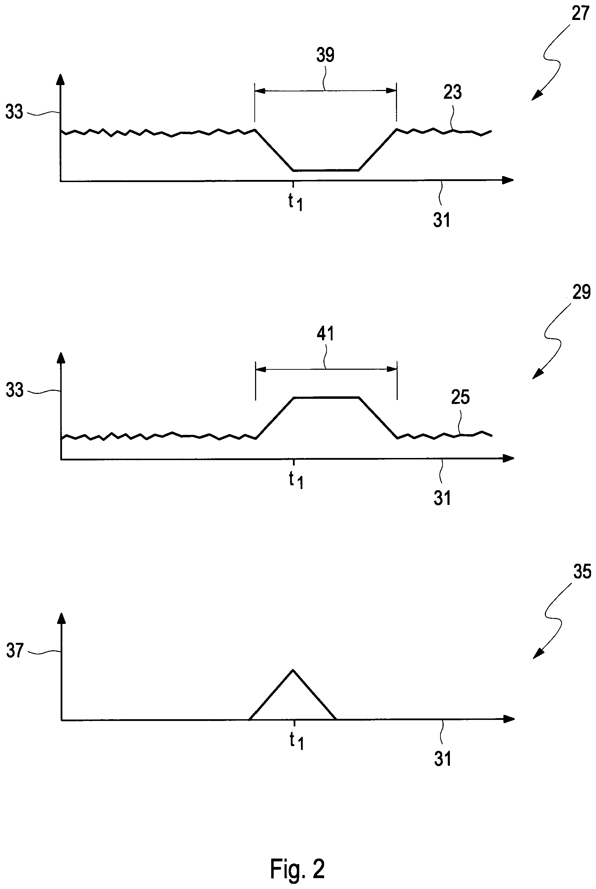

In Figur 2 sind zwei unterschiedliche Verläufe 23 und 25 eines Sicherindex in Diagrammen 27 und 29 dargestellt, die sich über Achsen "Zeit" 31 und "Sicherheit" 33 aufspannen. In Diagramm 35, das sich über Achsen "Zeit" 31 und "Höhe" 37 aufspannt, ist ein Verlauf von Messwerten des Sensors 19 dargestellt.

Der Sicherheitsindex berechnet sich bspw. durch eine Varianz der durch den Sensor 19 ermittelten Messwerte und spiegelt eine Vertrauenswürdigkeit der gemessenen Daten wieder. Zu einem Zeitpunkt t1 tritt die in Figur 1 dargestellte Unebenheit 5 auf und wird von dem Sensor 19 des Fahrzeugs 1 erkannt.

Für den in Diagramm 27 dargestellten Fall einer niedrigen Sicherheit bzw. von niedrigen Werten des Sicherheitsindex, wie durch einen Bereich 39 des Verlaufs 23 ersichtlich, ist erfindungsgemäß vorgesehen, dass eine Regelung durch den reaktiven Regler erfolgt, da eine Fehleinstellung durch eine proaktive Regelung auf Basis von mit einer hohen Unsicherheit bzw. einer niedrigen Sicherheit behafteten Messdaten des Sensors 19, d. h. Sensordatenvermieden werden soll. Der in Diagramm 29 dargestellte Verlauf 25 mit einem hohen Sicherheitsindexwert in einem Bereich 41 bedingt eine proaktive Regelung durch das Steuergerät 7 des Fahrzeugs 1, da hier von einer passenden virtuellen Abbildung der Unebenheit 5 durch den Sensor 19 bzw. durch die durch den Sensor 19 ermittelten Messwerte auszugehen ist, so dass eine Fehleinstellung des Fahrzeugs 1 bzw. jeweiliger Fahrwerkskomponenten unwahrscheinlich ist.

## Patentansprüche

1. Verfahren zum Regeln mindestens einer Komponente eines Fahrwerks eines Fahrzeugs, bei dem in Abhängigkeit einer aktuellen Sicherheit von durch eine Sensorik erfassten Sensordaten eines zu befahrenden Fahrbahnabschnitts eine Parametrierung eines reaktiven Reglers der mindestens einen Komponente des Fahrwerks so verändert wird, dass der reaktive Regler bei einem Befahren des Fahrbahnabschnitts im Falle einer erhöhten Unsicherheit der Sensordaten mit einer gegenüber einem Normalbetrieb niedrigeren Reaktionszeit regelt, wobei die Unsicherheit bzw. Sicherheit der Sensordaten über einen Sicherheitsindex berechnet wird, und wobei der Sicherheitsindex über eine Varianz der Sensordaten berechnet wird.

2. Verfahren nach Anspruch 1, bei dem das Fahrwerk proaktiv geregelt wird, wenn die Sensordaten gemäß dem Sicherheitsindex als sicher eingestuft werden.

3. Verfahren nach einem der voranstehenden Ansprüche, bei dem die Sensordaten über mindestens einen Sensor der folgenden Liste an Sensoren bereitgestellt werden: Federwegsensor, Aufbaubeschleunigungssensor, Nicksensor oder Wanksensor.

4. Verfahren nach einem der voranstehenden Ansprüche, bei dem die Sensordaten mit GPS-Daten zu einem Datensatz verbunden und an einen Server übermittelt werden, der weitere Fahrzeuge mit entsprechenden Datensätzen von potentiell relevanten Fahrbahnabschnitten versorgt.

5. Verfahren nach einem der voranstehenden Ansprüche, bei dem der reaktive Regler in Abhängigkeit einer aktuellen Situation des Fahrzeugs und/oder einer aktuellen Situation einer jeweiligen Umgebung während dem Befahren des Fahrbahnabschnitts die mindestens eine Komponente des Fahrwerks zumindest zeitweise unter Verwendung einer gegenüber einem Normalbetrieb erhöhten Bandbreite und Verstärkung regelt, wobei der reaktive Regler in Abhängigkeit der Sensordaten mit einem Basiswert eingestellt wird.

6. Verfahren nach einem der voranstehenden Ansprüche, bei dem die mindestens eine Komponente des Fahrwerks des Fahrzeugs ausgewählt ist aus der folgenden Liste an Fahrwerkskomponenten: Aktoren, Stoßdämpfer, Federwegsbegrenzer, Druckregler, Bremssysteme Elektromotoren, Hydraulikzylinder oder Steuergeräte.

7. Steuergerät (7) zur Anordnung in einem Fahrzeug (1), das dazu konfiguriert ist, mindestens einen reaktiven Regler (9) in Abhängigkeit einer Sicherheit von durch eine Sensorik (19) des Fahrzeugs (1) ermittelten Sensordaten eines zu befahrenden Fahrbahnabschnitts so zu parametrieren, dass der reaktive Regler bei einem Befahren des Fahrbahnabschnitts im Falle einer erhöhten Unsicherheit der Sensordaten mit einer gegenüber einem Normalbetrieb niedrigeren Reaktionszeit regelt, wobei die Unsicherheit bzw. Sicherheit der Sensordaten über einen Sicherheitsindex zu berechnen ist, wobei der Sicherheitsindex über eine Varianz der Sensordaten zu berechnen ist.

## Claims

1. Method for controlling at least one component of a chassis of a vehicle, wherein as a function of a current certainty taken from sensor data detected by sensor of a road section to be driven on a parameterisation of a reactive controller of the at least one component of the chassis is changed, so that if the road section is driven on when the sensor data have high uncertainty the reactive controller controls with a reaction time that is decreased compared to normal operation, wherein the uncertainty and/or certainty of the sensor data is calculated by a certainty index, and wherein the certainty index is calculated by means of a variance of the sensor data.

2. Method according to claim 1, wherein the chassis is controlled proactively when the sensor data are classified as certain according to the certainty index.

3. Method according to any of the preceding claims, wherein the sensor data are provided by at least one sensor from the following list of sensors: spring deflection sensor, superstructure acceleration sensor, roll sensor or yaw sensor.

4. Method according to any of the preceding claims, wherein the sensor data is connected by GPS data to a dataset and transmitted to a server which provides further vehicles with corresponding datasets of potentially relevant road sections.

5. Method according to any of the preceding claims, wherein the reactive controller controls the at least one chassis component as a function of a current situation of the vehicle and/or a current situation of a respective environment while driving on the road section at least temporarily by using a bandwidth and amplification which is increased compared to the normal operation mode, wherein the reactive controller is set to a base value as a function of the sensor data.

6. Method according to any of the preceding claims, wherein the at least one component of the chassis of the vehicle is selected from the following list of chassis components: actuators, shock absorbers, spring deflection limiters, pressure controllers, brake systems, electric motors, hydraulic cylinders or control devices.

7. Control device (7) for arranging in a vehicle (1), which is configured to parameterise at least one reactive controller (9) as a function of a certainty taken from sensor data of a road section to be driven on detected by a sensor (19) of the vehicle (1), so that if the road section is driven on when the sensor data have high uncertainty the reactive controller controls with a reaction time that is decreased compared to normal operation, wherein the uncertainty or certainty of the sensor data is calculated by a certainty index, and wherein the certainty index is calculated by means of a variance of the sensor data.

## Revendications

1. Procédé de réglage d'au moins un composant d'un châssis d'un véhicule, dans lequel, en fonction d'une fiabilité actuelle de données de capteurs - recueillies par un système sensoriel - d'une section de chaussée à parcourir, un paramétrage d'un régulateur réactif du au moins un composant du châssis est modifié de sorte que le régulateur réactif, lors d'un parcours de la section de chaussée, dans le cas d'un manque de fiabilité accru des données de capteurs, règle avec un temps de réaction plus bas par rapport à un fonctionnement normal, dans lequel le manque de fiabilité ou la fiabilité des données de capteurs est calculé(e) via un indice de fiabilité et dans lequel l'indice de fiabilité est calculé via une variance des données de capteurs.

2. Procédé selon la revendication 1, dans lequel le châssis est réglé de manière proactive si les données de capteurs sont classées comme plus fiables selon l'indice de fiabilité.

3. Procédé selon l'une quelconque des revendications précédentes, dans lequel les données de capteurs sont fournies via au moins un capteur de la liste suivante de capteurs : capteur de débattement, capteur d'accélération de carrosserie, capteur de tangage ou capteur de roulis.

4. Procédé selon l'une quelconque des revendications précédentes, dans lequel les données de capteurs sont reliées à des données GPS pour former un jeu de données et sont transmises à un serveur qui alimente d'autres véhicules par des jeux de données correspondants de sections de chaussée potentiellement pertinentes.

5. Procédé selon l'une quelconque des revendications précédentes, dans lequel le régulateur proactif règle, en fonction d'une situation actuelle du véhicule et/ou d'une situation actuelle d'un environnement respectif au cours du parcours de la section de chaussée le au moins un composant du châssis au moins par intervalles en utilisant une largeur de bande et un renforcement plus élevés par rapport à un fonctionnement normal, dans lequel le régulateur réactif est réglé en fonction des données de capteurs avec une valeur de base.

6. Procédé selon l'une quelconque des revendications précédentes, dans lequel le au moins un composant du châssis du véhicule est choisi dans la liste suivante de composants de châssis : actionneurs, amortisseurs de chocs, limiteurs de débattement, régulateurs de pression, systèmes de freinage, moteurs électriques, cylindres hydrauliques ou appareils de commande.

7. Appareil de commande (7) pour agencer dans un véhicule (1), qui est configuré pour paramétrer au moins un régulateur réactif (9) en fonction d'une fiabilité de données de capteurs - recueillies par un système sensoriel (19) du véhicule (1) - d'une section de chaussée à parcourir de sorte que le régulateur réactif, lors d'un parcours de la section de chaussée, dans le cas d'un manque de fiabilité élevé des données de capteurs, règle avec un temps de réaction plus bas par rapport à un fonctionnement normal, dans lequel le manque de fiabilité ou la fiabilité des données de capteurs doit être calculé(e) via un indice de fiabilité, dans lequel l'indice de fiabilité doit être calculé via une variance des données de capteurs.
